# EUROPEAN PATENT SPECIFICATION

(11) **EP 3 321 324 B1**
(45) Date of publication and mention of the grant of the patent: **19.08.2020**
(21) Application number: 16806813.8
(22) Date of filing: 07.06.2016
(51) Int. Cl.: C08L 69/00, C08L 55/02, C08K 5/00

(54) **POLYCARBONATE COMPOSITION AND PREPARATION METHOD THEREFOR**
POLYCARBONATZUSAMMENSETZUNG UND HERSTELLUNGSVERFAHREN DAFÜR
COMPOSÉ DE POLYCARBONATE ET SON PROCÉDÉ DE FABRICATION

(30) Priority: 08.06.2015 CN 201510308236
(43) Date of publication of application: 16.05.2018
(73) Proprietor: Kingfa Sci. & Tech. Co., Ltd., Guangzhou, Guangdong 510663 (CN)
(72) Inventor: DONG, Xiangmao, Guangzhou Guangdong 510663 (CN); CEN, Yin, Guangzhou Guangdong 510663 (CN); TONG, Wei, Guangzhou Guangdong 510663 (CN); AI, Junwei, Guangzhou Guangdong 510663 (CN); LI, Mingkun, Guangzhou Guangdong 510663 (CN); HE, Jihui, Guangzhou Guangdong 510663 (CN); SUN, Donghai, Guangzhou Guangdong 510663 (CN)
(74) Representative: Petraz, Gilberto Luigi
(86) International application number: PCT/CN2016/085119
(87) International publication number: WO 2016/197915

(56) References cited:
- EP-A1- 2 520 617
- WO-A1-99/51671
- WO-A1-2006/041237
- CN-A- 1 304 427
- CN-A- 104 558 683
- CN-A- 104 987 689
- GB-A- 2 325 933
- JP-A- S59 202 240
- KR-A- 20060 000 706
- US-A- 6 031 035
- US-B1- 6 498 228

## Description

### TECHNICAL FIELD

The present invention relates to the technical field of engineering plastics, and particularly relates to a polycarbonate composition and a preparation method thereof.

### BACKGROUND

Polycarbonate PC has properties such as a relatively high impact resistance and a relatively high heat resistance; and to improve its processability and to overcome a disadvantage of being sensitive to a notch impact, rubber-modified polymers such as ABS, MBS, ACR, silicone rubber and the like may generally be added. Particularly, a PC/ABS alloy having PC and ABS as main raw materials is an important engineering plastic, which on the one hand can improve a heat resistance and a tensile strength of ABS, on the other hand can lower a melt viscosity of PC, ameliorate the processability, reduce sensitivities of an internal stress and an impact strength of a product to a thickness of the product. PC/ABS materials are widely used in fields such as automobiles, machinery, and home appliances. In many cases, a requirement for fire retarding needs to be proposed, however using a fire retardant may lower mechanical properties of a material, and a melt index of a mixture always heavily vary.

Patent CN103391970 discloses that using a sulfonate fire retardant containing a low level of free fluorions and sulfate irons, having an excellent fire retarding property and an excellent mechanical property, but disadvantages of the sulfonate fire retardant such as difficulty in dispersing and poor hydrolytic stability limit a wide use of the sulfonate fire retardant.

Patent JP2013506720A and CN102575063 disclose that usage of tri-iso-octyl phosphate can largely improve a melt stability of PC, but it's unrealistic in many application cases to merely limit a specific use of tri-iso-octyl phosphate.

US 6 498 228 B1 relates to a flame retardant polycarbonate resin composition, comprising: A) 30-95 wt% of polycarbonate; B) 5-80 wt% of a grafted rubber-modified styrene resin; C) 1-30 pbw relative to 100 pbw of (A) and (B), of a phosphorous containing flame retardant and D) 0.002-5 pbw relative to 100 pbw of (A) and (B), of a fluoro-olefin resin (i.e. other aids); wherein the amount of phenols of said resin composition extracted in a Soxhlet extraction with a solvent of acetone is at most 300 ppm, preferably less than 200 ppm, and in the examples as low as 70 and 80 Ppm.

WO 2006/041237 A1 relates to flame retardant polycarbonate compositions comprising: A) 45-95 parts by weight of thermoplastic polycarbonate resin; B) 1-50 parts by weight of a rubber modified vinyl graft copolymer; C) 0-50 parts by weight of a vinyl copolymer; D) 1-30 parts by weight of a mixture of oligomeric phosphoric acid ester compounds; and optionally E) 0-60 parts by weight additives comprising flame retardant aid.

Until now, no influences of a content of phosphorus oxychloride on the fire resistance and the melt stability of the polycarbonate composition have been reported.

With a result of extensive experiments, the present inventors have surprisingly found that when a tested content of phosphorus oxychloride in the fire retardant component used in a polycarbonate composition formula, based on a total weight of the polycarbonate composition does not exceed 80 ppm, phosphorus oxychloride remained in a trace level can be beneficial to generation of a stable compound such as phosphoric acid and a polymetaphosphate, can further facilitate generation of a char layer, can improve dispersion of a phosphorus-containing fire retardant in the composition at the same time, finally can obviously improve the fire resistance and the melt stability of the polycarbonate composition, and is particularly suitable for an occasion with relatively high requirements for an operating environment.

### SUMMARY OF THE INVENTION

In order to overcome disadvantages and shortcomings of the prior art, an object of the present invention is to provide a polycarbonate composition with a fire resistance and a melt stability that are obviously improved.

Another object of the present invention is to provide a preparation method of the above-described polycarbonate composition.

The present invention is accomplished by the following technical solution:
a polycarbonate composition, comprising the following components in parts by weight:
   a. 31-75 parts of polycarbonate;
   b. 9-35 parts of rubber-modified graft copolymer;
   c. 5-24.1 parts of fire retardant; and
   d. 0-9.9 parts of other aids;
wherein the sum of the parts by weight of the four components a, b, c, and d is 100, and a content of phenol based on a total weight of the polycarbonate composition is less than or equal to 80 ppm and greater than or equal to 0.1 ppm.

In particular, a test method of the content of phosphorus oxychloride: a liquid chromatography methanol solution extrapolation method is used, a certain amount of the polycarbonate composition is weighted, is performed Soxhlet extraction with methanol of 85 °C, and then enters into a styrene adsorption column at a normal temperature at a certain flow rate, a standard curve of standard phosphorus oxychloride substance solutions of different concentrations is created, and the content of phosphorus oxychloride in a system is calculated by an extrapolation method according to a specific efflux time. After 2 g of the polycarbonate composition is weighted using an electronic balance, a sample is put into a constant temperature oven having a predetermined temperature of 120 °C and a uniform and stable temperature for 2 hours, followed by putting into a Soxhlet extractor device to perform methanol extraction for 48 hours, with an extraction temperature of 85 °C, 20 µL of an extraction solution is extracted by a filter after the extraction solution is placed to a constant temperature, the 20 µL of the extraction solution is injected into an adsorption column of C18 to perform separation and quantifying by means of a mobile phase (methanol: purified water = 90 : 10) at the flow rate of 10 ml/min, after the standard curve is created by creating the standard solutions of 1 ppm, 10 ppm, 30 ppm, 50 ppm and 80 ppm, the content of phosphorus oxychloride can be calculated by the specific efflux time of standard samples and the extrapolation method.

Effects of fire retarding may conversely be worse, and small molecules generated may destroy a carbonization layer of the fire retardant and influence an appearance of a product, when a tested content of phosphorus oxychloride based on the total weight of the polycarbonate composition is greater than 80 ppm.

Preferably, the content of phosphorus oxychloride based on the total weight of the polycarbonate composition and the content of phenol based on a total weight of the polycarbonate composition is less than or equal to 70 ppm and greater than or equal to 5 ppm; more preferably, less than or equal to 50 ppm and greater than or equal to 10 ppm.

The polycarbonate is selected from one or more of an aromatic polycarbonate, an aliphatic polycarbonate, an aromatic-aliphatic polycarbonate, a branched polycarbonate and a siloxane copolycarbonate; preferably the aromatic polycarbonate.

Preferably, the aromatic polycarbonate is an aromatic polycarbonate with a viscosity-average molecular weight of 13000-40000, more preferably the aromatic polycarbonate with the viscosity-average molecular weight of 16000-28000, and further preferably the aromatic polycarbonate with the viscosity-average molecular weight of 17000-24000. When the viscosity-average molecular weight is in the above-described range, a mechanical strength is good and an excellent formability can be retained.

In particular, the viscosity-average molecular weight is calculated by a solution viscosity using dichloromethane as a solvent at a test temperature of 25 °C. A concentration of a terminal hydroxyl group in a polycarbonate resin is arbitrary and can be selected and determined according to requirements, but generally is less than or equal to 1,000 ppm, preferably less than or equal to 800 ppm, and more preferably less than or equal to 600 ppm. A lower limit of the concentration, particularly in the case of producing the polycarbonate resin by a melted state transesterification method, generally is greater than or equal to 10 ppm, preferably greater than or equal to 30 ppm, and more preferably greater than or equal to 40 ppm. A reduction of the molecular weight can be avoided, such that a mechanical characteristic of a polycarbonate resin composition can be more ameliorated. Unit of the concentration of the terminal hydroxyl group herein is represented as ppm, which is based on a mass of the terminal hydroxyl group versus a mass of the polycarbonate resin. A colorimetric analysis by carbon tetrachloride/acetic acid procedure is used as a measurement method (see Macromol. Chem., 88, 215, 1965).

The polycarbonate resin may be used as an individual polycarbonate resin (wherein the term of "individual polycarbonate resin" isn't limited to a model that includes only one kind of a polycarbonate resin, for example, including a model containing a plurality of polycarbonate resins having different monomer formulas and different molecular weights), or may be combined and used as an alloy (a mixture) of the polycarbonate resin and different thermoplastic resins. Besides, the polycarbonate resin may constitute a copolymer that has the polycarbonate resin as its main component, such as a copolymer comprising an oligomer or a polymer containing a siloxane structure for an object of further improving the fire resistance and the impact resistance; a copolymer comprising a monomer, an oligomer or a polymer containing a phosphorus atom for an object of further improving a thermal oxidation stability and the fire resistance; a copolymer comprising a monomer, an oligomer or a polymer containing a dioxyanthraquinone structure for an object of improving the thermal oxidation stability; a copolymer comprising an oligomer or a polymer for example represented by a polystyrene, containing a olefin structure, for an object of ameliorating an optical property; and a copolymer comprising a polyester resin oligomer or polymer for an object of improving chemical resistance; and so on.

For the objects of improving an appearance of a molding product and ameliorating flowability, the polycarbonate resin may also comprise a polycarbonate oligomer. A viscosity-average molecular weight [Mv] of the polycarbonate oligomer is generally greater than or equal to 1,500, and preferably greater than or equal to 2,000, but generally less than or equal to 9,500, and preferably less than or equal to 9,000. Besides, preferably, a content of the comprised polycarbonate oligomer is set as less than or equal to 30 wt% of the polycarbonate resin (comprising the polycarbonate oligomer).

Besides, the polycarbonate resin may be a polycarbonate resin that is reproduced by a used manufactured product, rather than a kind of polycarbonate resin that is made from an unused raw material (so-called recycled material polycarbonate resin). Examples of the used manufactured product include an optical recording medium such as a disc and the like; a transparent automotive part such as an automotive window glass, an automotive head-light glass, a windscreen and the like; a container such as a water bottle and the like; a spectacle lens; and a building material such as an acoustic panel, a glass window, and a corrugated plate; and so on. In addition, a crushing product or a molten pellet that is obtained from a defective good, a slag, a runner and the like may be used.

However, it should be noticed that a reproduced polycarbonate resin is preferably less than or equal to 80 wt%, and more preferably less than or equal to 50 wt% of the polycarbonate resin that is comprised in the polycarbonate resin composition of the present invention. The reproduced polycarbonate resin may well go through degradation because of heat or aging, and if this kind of polycarbonate resin is used in an amount greater than the above-described range, it may negatively influence a hue and the mechanical characteristic.

In particular, the polycarbonate is selected from one or more of a polycarbonate prepared by an interfacial polymerization method, a polycarbonate prepared by a melted state transesterification method, a polycarbonate prepared by a pyridine method, a polycarbonate prepared by a method of ring-opening polymerization of a cyclic carbonate compound and a polycarbonate prepared by a method of solid phase transesterification of a prepolymer. The particularly preferred methods will be described in detail below.

Firstly a method of producing the polycarbonate resin by the interfacial polymerization method will be described: in the interfacial polymerization method, firstly, making a dihydroxy compound and a carbonate precursor (preferably a phosgene) react in the presence of an inert organic solvent and an aqueous alkali, generally pH is kept at 9 or above at the same time, and then performing the interfacial polymerization in the presence of a polymerization catalyst to obtain the polycarbonate resin. A molecular weight regulator (chain terminator) and an antioxidant that avoids oxidation of the dihydroxy compound may also exist in a reaction system according to requirements.

The dihydroxy compound and the carbonate precursor have been listed above. The phosgene used as the carbonate precursor is particularly preferred, and wherein such method using the phosgene is particularly called a phosgene method.

Examples of the inert organic solvent include a hydrochloric ether, such as dichloromethane, 1,2-dichloroethane, chloroform, single chlorobenzene and dichlorobenzene; and an aromatic hydrocarbon, such as benzene, methylbenzene, and dimethylbenzene. One kind of the organic solvent may be used, or two or more kinds of the organic solvents may be used in an expected combination and an expected proportion.

Examples of an alkali compound comprised in the aqueous alkali include an alkali metal compound, such as sodium hydroxide, potassium hydroxide, lithium hydroxide and sodium bicarbonate; and an alkaline earth metal compound. Sodium hydroxide and potassium hydroxide are preferred. One kind of the alkali compound may be used, or two or more kinds of the alkali compounds may be used in an expected combination and an expected proportion.

Although a concentration of the alkali compound in the aqueous alkali herein is not limited, but 5 wt%-10 wt% is generally used to control the pH of the aqueous alkali to be 10 to 12 during the reaction. In addition, for example, when the phosgene bubbles, a mole ratio of a bisphenol compound to the alkali compound is generally set to be greater than or equal to 1:1.9, and preferably greater than or equal to 1:2.0, but less than or equal to 1:3.2, and preferably less than or equal to 1:2.5, to control pH of an aqueous phase to be 10 to12, preferably 10 to 11.

Examples of the polymerization catalyst include an aliphatic tertiary amine , such as trimethylamine, triethylamine, tributylamine, tripropylamine, trihexylamine and the like; a cycloaliphatic tertiary amine, such as N,N'-dimethylcyclohexylamine, N,N'-diethylcyclohexylamine and the like; an aromatic tertiary amine, such as N,N'-dimethylaniline, N,N'-diethylaniline and the like; a quaternary ammonium salt, such as trimethylbenzylammonium chloride, tetramethylammonium chloride, triethylbenzylammonium chloride and the like; a pyridine; a guanine; and a guanidinium salt and so on. One kind of the polymerization catalyst may be used, or two or more kinds of the polymerization catalysts may be used in an expected combination and an expected proportion.

Examples of the molecular weight regulator include an aromatic phenol having a univalent phenolic hydroxyl group; an aliphatic alcohol, such as methanol, butanol and the like; mercaptan; and phthalimides; and so on, and among these, the aromatic phenol is preferred. Specific examples of this kind of aromatic phenol include an alkyl substituted phenol such as m-methylphenol, p-methylphenol, m-propylphenol, p-propylphenol, p-tert-butylphenol, p-long chain alkyl substituted phenol and the like; an vinyl-containing phenol such as isopropenylphenol; an epoxy group-containing phenol; and a carboxyl-containing phenol, such as o-hydroxybenzoic acid, 2-methyl-6-hydroxyphenylacetic acid and the like. One kind of the molecular weight regulator may be used, or two or more kinds of the molecular weight regulators may be used in an expected combination and an expected proportion.

A dosage of the molecular weight regulator is generally greater than or equal to 0.5 mol relative to every 100 mol of the dihydroxy compound and preferably greater than or equal to 1 mol, but is generally less than or equal to 50 mol, and preferably less than or equal to 30 mol. Setting the dosage of the molecular weight regulator to such range may ameliorate a thermal stability and a hydrolytic resistance of the polycarbonate resin composition.

A reaction substrate, a reaction medium, a catalyst, an additive and etc. may be mixed together in any expected order, as long as the expected polycarbonate resin can be obtained, and an appropriate order may be created according to requirements. For example, when the phosgene is used as the carbonate precursor, the molecular weight regulator may be added at any expected time between the time when the dihydroxy compound reacts with the phosgene (phosgenation) and the time when the polymerization reaction starts.

A reaction temperature is generally set as 0 to 40 °C, and a reaction time is generally in a range that from several minutes (such as 10 minutes) to several hours (such as 6 hours).

Next, a preparation method of the polycarbonate resin by the melted state transesterification will be described: in the melted state transesterification, for example, a transesterification is performed between a carbonic acid diester and the dihydroxy compound.

At the same time, examples of the carbonic acid diester include a dialkyl carbonate compound, such as dimethyl carbonate, diethyl carbonate, di-tert-butyl carbonate; diphenyl carbonate; and a substituted diphenyl carbonate, such as ditolyl carbonate and the like. Among these, diphenyl carbonate and the substituted diphenyl carbonate are preferred, and particularly, diphenyl carbonate is even more preferred. One kind of the carbonic acid diester may be used, or two or more kinds of the carbonic acid diesters may be used in an expected combination and an expected proportion.

The dihydroxy compound and the carbonic acid diester with an expected ratio may be used on a condition that an objective polycarbonate resin can be obtained, but using greater than or equal to 1 molar equivalent of the carbonic acid diester relative to every 1 mol of the dihydroxy compound is preferred, and using greater than or equal to 1.01 molar equivalents of the carbonic acid diester is even more preferred. However, an upper limit generally is less than or equal to 1.30 molar equivalents. A content of the terminal hydroxyl group may be regulated to a preferred range by setting the ratio of the two compounds into this kind of range.

The content of the terminal hydroxyl group in the polycarbonate resin tends to greatly influence the thermal stability, the hydrolytic resistance, and the hue. Therefore, the content of the terminal hydroxyl group may be regulated by any expected methods that are well known according to requirements. In the transesterification reaction, wherein the polycarbonate resin for regulating the content of the terminal hydroxyl group may be obtained by regulating a mixing ratio between the carbonic acid diester and an aromatic dihydroxy compound, and by regulating an extent of a pressure reduction. In addition, the molecule weight of the polycarbonate resin obtained may generally be regulated by such progress.

Therein, in the case that regulation of the content of the terminal hydroxyl group is regulated by the mixing ratio of the carbonic acid diester and the dihydroxy compound, the above-described mixing ratio is used.

It may be mentioned that wherein individually adding the chain terminator during the reaction is a more positive regulating method. Examples of the chain terminator during the process include for example a monovalent phenol, a monovalent carboxylic acid, a carbonate diester and the like. One kind of the chain terminator may be used, or two or more kinds of the chain terminators may be used in an expected combination and an expected proportion.

When producing the polycarbonate resin by the melted state transesterification method, a transesterification catalyst is generally used. Any expected transesterification catalyst may be used. Among these, for example, using the alkali metal compound and/or the alkali earth metal compound is preferred. In addition, as an ancillary compound, for example, the alkaline compound, such as an alkaline boron compound, an alkaline phosphorus compound, an alkaline ammonium compound, an alkaline amine compound and the like, may be used. One kind of the transesterification catalyst may be used, or two or more kinds of the transesterification catalysts may be used in an expected combination and an expected proportion.

A reaction temperature in the melted state transesterification method is generally 100 °C to 320 °C. In addition, a reaction is generally performed under the reduced pressure of less than or equal to 2 mmHg. A detailed process should be a process in which a melting condensation polymerization reaction is performed under the above-described condition, and a by-product such as an aromatic hydroxyl compound is removed at the same time.

The melting condensation polymerization reaction may be performed by a batch process or a continuous process. When the batch process is performed, the reaction substrate, the reaction medium, the catalyst, the additive and etc. may be mixed together in any expected order, as long as an objective aromatic polycarbonate resin can be obtained, and an appropriate order may be created according to requirements. However, among these, considering for example a stability of the polycarbonate and the polycarbonate resin composition, the melting condensation polymerization performed by the continuous process is preferred.

A catalyst deactivation agent may be used in the melted state transesterification method according to requirements. Any expected compound neutralizing the transesterification catalyst may be used as the catalyst deactivation agent. Examples include a sulfur-containing organic compound and derivatives thereof and the like. One kind of the catalyst deactivation agent may be used, or two or more kinds of the catalyst deactivation agents may be used in an expected combination and an expected proportion.

A dosage of the catalyst deactivation agent generally should be greater than or equal to 0.5 weight equivalent and preferably greater than or equal to 1 weight equivalent, relative to the alkali metal or the alkaline earth metal that is contained in the transesterification catalyst. Besides, a concentration of the catalyst deactivation agent generally should be greater than or equal to 1 ppm, but generally less than or equal to 100 ppm, and preferably less than or equal to 20 ppm, relative to the aromatic polycarbonate resin.

In particular, the graft copolymer is a polymer obtained by a copolymerization of a styrene monomer, an acrylic acid monomer and a silicon monomer in the presence of a rubber polymer. The graft copolymer is selected from one or more of a graft copolymer prepared by a bulk method, a graft copolymer prepared by an emulsion polymerization method, and a graft copolymer prepared by a bulk-suspension polymerization method.

The bulk polymerization method includes five steps: dissolving, prepolymerizing, polymerizing, devolatilizing and pelletizing, which more particularly are: dissolving a rubber in ethylbenzene and styrene; adding monomers in accordance with a formulation amount to prepare a raw material solution, inputting the prepared raw material solution into a prepolymerizer to perform prepolymerization; during polymerization, the monomers grafting to the rubber, the monomers being copolymerized at the same time, separating from the solution, forming a discontinuous phase dispersed in a continuous phase in the raw material solution; after enough monomers are polymerized, a copolymer in the discontinuous phase becomes a continuous phase, and the grafted rubber forms a discontinuous phase and is dispersed in the continuous copolymer phase, thereby accomplishing a phase transition; finally, performing further polymerization, vacuum degassing, extruding, cooling and pelletizing to obtain a final product.

The bulk-suspension polymerization method comprises: regulating a rubber and a monomer solution in accordance with a formula, and adding a polymerization regulator and a radical initiator at the same time; performing bulk polymerization on a monomer mixture at 80 °C to 120 °C, continuously stirring during polymerization, and adding deionized water and a suspending agent into the mixture so that the mixture is dispersed; and then performing suspension polymerization using a radical catalyst, coagulating, filtering, washing, dehydrating and drying after obtaining a certain polymerization degree, and then pelletizing to obtain a product.

The emulsion polymerization method comprises: grafting a rubber by controlling a polymerization temperature at 50 °C to 80 °C, and adding a monomer mixture into a rubber latex in the presence of an initiator, deionized water, an emulsifier and a cross-linking agent, and finally pelletizing after washing, dehydrating and drying to obtain a product.

In particular, the graft copolymer is selected from graft copolymers containing following b.1 on b.2 in parts by weight:
b.1 5-95 parts of a mixture of b.1.1 and b.1.2:
   b.1.1 50-95 parts of one or more of styrene, a styrene derivative such as α-methyl styrene, p-benzyl styrene, and divinyl styrene, C1-C8 alkyl methacrylate, C1-C8 alkyl acrylate, dimethyl siloxane, phenyl siloxane, and a multi-alkyl siloxane;
   b.1.2 5-50 parts of one or more of acrylonitrile, methyl acrylonitrile, C1-C8 alkyl methacrylate, and C1-C8 alkyl acrylate; and
b.2 5-95 parts of one or more of a polybutadiene, a polyisoprene, a styrene-butadiene random copolymer and block copolymer, an acrylonitrile-butadiene random copolymer and block copolymer, a copolymer of a polybutadiene and a polyisoprene, a copolymer of ethylene and α-alkene, a copolymer of ethylene and an α-unsaturated carboxylate, an ethylene-propene-nonconjugated diene terpolymer, an acryloyl rubber, and an organic siloxane rubber.

More preferably, the graft copolymer is selected from one or more of a acrylonitrile-styrene copolymer AS, an acrylonitrile-butadiene-styrene graft copolymer ABS, a methyl methacrylate-acrylonitrile-butadiene-styrene copolymer MABS, an acrylonitrile-styrene-acrylic acid terpolymer ASA, and a methacrylate-butadiene-styrene graft copolymer MBS; wherein, a particle size of the MBS is preferably 0.1 µm to 0.5 µm, a particle size of the ABS in the bulk polymerization method is preferably 0.1 µm to 2 µm, and a particle size of the ABS in the emulsion polymerization method is preferably 0.05 µm to 0.2 µm.

Further preferred is the acrylonitrile-butadiene-styrene graft copolymer ABS, wherein a percentage by weight of a butadiene rubber polymer in the ABS is 5 wt% to 50 wt%, and a particle size distribution can be a uniform distribution or a multi-distribution with two or more peak values.

In particular, the fire retardant is selected from a halogen-based fire retardant or a halogen-free fire retardant, preferably the halogen-free fire retardant. The halogen-based fire retardant is selected from one or more of a brominated polystyrene, a brominated polyphenyl ether, a brominated bisphenol A type epoxy resin, a brominated styrene-maleic anhydride copolymer, a brominated epoxy resin, a brominated phenoxy resin, decabromodiphenyl ether, decabromodiphenyl, a brominated polycarbonate, perbromotricyclopentadecane or a brominated aromatic crosslinked polymer, preferably the brominated polystyrene. The halogen-free fire retardant is selected from one or more of a nitrogen-containing fire retardant, a phosphorus-containing fire retardant or a nitrogen- and phosphorus-containing fire retardant, preferably the phosphorus-containing fire retardant.

Preferably, the phosphorus-containing fire retardant is selected from one or more of triphenyl phosphate, tritolyl phosphate, cresyl diphenyl phosphate, trixylyl phosphate, tris(2,4,6-trimethylphenyl) phosphate, tris(2,4-di-tert-butylphenyl) phosphate, tris(2,6-di-tert-butylphenyl) phosphate, resorcinol bis(diphenyl phosphate), hydroquinone bis(diphenyl phosphate), bisphenol A-bis(diphenyl phosphate), resorcinol bis(2,6-di-tert-butylphenyl phosphate), and hydroquinone bis(2,6-dimethylphenyl phosphate).

The polycarbonate composition may further comprise other aids, for example, selected from one or more of a heat stabilizer, an antioxidant, an anti-dripping agent, a light stabilizer, a plasticizer, a filler, and a colorant.

The suitable thermal stabilizer includes an organic phosphite such as triphenyl phosphite, tri(2,6-dimethylphenyl) phosphite, and tris(nonylphenyl) phosphite, dimethylphenyl phosphonate, and trimethyl phosphate.

The suitable antioxidant includes an organic phosphite, an alkylated monophenol or polyphenol, an alkylated reaction product of a polyphenol and a diene, a butylated reaction product of p-cresol or dicyclopentadiene, alkylated hydroquinones, hydroxylated thiodiphenyl ethers, alkylene-bisphenol, a benzyl compound, polyol esters and etc.

The suitable anti-dripping agent is preferably a fluorated polyolefin, and the fluorated polyolefin is well known (referring to EP-A 640 655, for example). A commercially preferred product is, for example, obtained from Teflon® 30 N of DuPont.

The suitable light stabilizer includes one or a plurality of combinations of benzotriazoles and benzophenones.

The suitable plasticizer is phthalate.

The suitable filler includes titanium dioxide, talc powder, mica, barium sulfate and etc.

The suitable colorant includes various pigments, and dyes.

A preparation method of the above-described polycarbonate composition comprises following steps:
1) formulating phosphorus oxychloride and the fire retardant according to a mass ratio of 1:50, along with methanol, into a phosphorus oxychloride methanol solution with a mass fraction of 0.02wt%;
2) blending the phosphorus oxychloride methanol solution and a polycarbonate in a high-speed mixer to obtain a pretreated polycarbonate, and drying for 8 hours under 120 °C to remove residual methanol; and
3) after weighing the pretreated polycarbonate, a graft copolymer, the fire retardant, and other aids in proportion, blending by the high-speed mixer or a mixer, extruding, cooling by means of water, and pelletizing to obtain a columnar particulate polycarbonate composition.

Because the polycarbonate composition of the present invention has an excellent long-term heat stability and weathering property, no appearance defects and excellent mechanical property, the polycarbonate composition of the present invention can be used for outdoor and indoor application fields, for example shell parts of various types and sizes, household appliances such as a TV set, a printer, a modem shell, and a display shell, or automobile parts for outdoor use, an enclosure or a cover in a building field, and a housing and a frame for an electrical appliance.

Compared with the prior art, the present invention has following advantageous effects:
1) the present invention performs a pretreatment for the fire retardant by using phosphorus oxychloride, phosphorus oxychloride remained in a trace level that being modified and after the pretreatment can be beneficial to generation of a stable compound such as phosphoric acid, a polymetaphosphate and the like, can further facilitate generation of a char layer, can improve desperation of a phosphorus-containing fire retardant in the composition at the same time, and can avoid drawbacks that a fire retarding efficient of the phosphorus-containing flame retardant generally adopted in the prior art is not high enough and a melt is instable; and
2) according to the present invention, when a content of phosphorus oxychloride in a polycarbonate composition formula, based on the total weight of the polycarbonate composition does not exceed 80 ppm, phosphorus oxychloride remained in the trace level that being modified after the pretreatment can obviously improve a fire resistance and a melt stability of the polycarbonate composition, and is particularly suitable for an occasion with relatively high requirements for an operating environment.

### DETAILED DESCRIPTION OF THE PREFERRED EMBODIMENT

The present invention will be further described below by specific implementations, the following embodiments are preferred implementations of the present invention, but the implementations of the present invention are not limited by the following embodiments.

Testing standards or methods of various properties:
A determination method of a content of phosphorus oxychloride: a liquid chromatography methanol solution extrapolation method was used, a certain amount of a polycarbonate composition was weighted, and was performed Soxhlet extraction with methanol of 85 °C, and then entered into a styrene adsorption column at a normal temperature at a certain flow rate, and a standard curve of standard phosphorus oxychloride substance solutions of different concentrations was created, and the content of phosphorus oxychloride was calculated by an extrapolation method according to a specific efflux time. After 2 g of the polycarbonate composition was weighted using an electronic balance, a sample was put into a constant temperature oven having a predetermined temperature of 120 °C and a uniform and stable temperature for 2 hours, followed by being put into a Soxhlet extractor device to perform methanol extraction for 48 hours, with an extraction temperature of 85 °C, 20 µL of an extraction solution was extracted by a filter after the extraction solution was placed to a constant temperature, the 20 µL of the extraction solution was injected into an adsorption column of C18 to perform separation and quantifying by means of a mobile phase (methanol: purified water = 90 : 10) at the flow rate of 10 ml/min, after the standard curve was created by creating the standard solutions of 1 ppm, 10 ppm, 30 ppm, 50 ppm and 80 ppm, the content of phosphorus oxychloride can be calculated by the specific efflux time of standard samples and the extrapolation method.

A determination method of UL-94 fire retarding:
tests for flammability was performed according to a program of announcement 94 of Underwriter Laboratories which was entitled as "Tests for Flammability of Plastic Materials, UL94"; several ratings can be applied based on a rate of burning, time to extinguish, ability to resist dripping, and whether or not drips are burning; a sample used for the tests was a bar with a size of 125 mm length × 13 mm width × no more than 13 mm thickness, the thickness of the bar was 1 mm, 0.8 mm or 0.75 mm; according to the protocol, materials can be classified into UL 94 HB (horizontal burning), V0, V1, V2, 5VA and/or 5VB based on obtained test results of five samples; however, compositions of the present invention were only tested and classified into V0, V1 and V2.

Standards for every rating therein are described below:
V0: in a sample which is placed so that its long axis is 180 degrees to a flame, the periods of flaming and/or smoldering do not exceed 10 seconds after removing an igniting flame, and the vertically placed sample produces no drip of burning particles that ignite absorbent cotton; five bar flame out time is the flame out time for five bars, every bar is ignited twice, wherein a sum of the flame out times of the first (t₁) and the second (t₂) ignitions is less than or equal to 50 seconds which is the longest flame out time (t₁+t₂);
V1: in the sample which is placed so that its long axis is 180 degrees to the flame, the periods of flaming and/or sm
   oldering do not exceed 30 seconds after removing the igniting flame, and the vertically placed sample produces no drip of burning particles that ignite absorbent cotton; the five bar flame out time is the flame out time for five bars, every bar is ignited twice, wherein the sum of the flame out time of the first (t₁) and the second (t₂) ignitions is less than or equal to 250 seconds which is the longest flame out time (t₁+t₂); and
V2: in the sample which is placed so that its long axis is 180 degrees to the flame, the average period of flaming and/or smoldering does not exceed 30 seconds after removing the igniting flame, but the vertically placed sample produces drips of burning particles that ignite absorbent cotton; the five bar flame out time is the flame out time for five bars, every bar is ignited twice, wherein the sum of the flame out time of the first (t₁) and the second (t₂) ignit ions is less than or equal to 250 seconds which is the greatest flame out time (t₁+t₂).

A detemination method of a stability factor of melt flow rate (MFR): plastic particles were melted into a plastic fluid in a certain time (10 minutes) under a certain temperature and a certain pressure (standards for various kind of materials were different), and then grams of the plastic fluid flowing out from a circular tube with a diameter of 2.1 mm were tested. The greater the value presented the better the processing flowability of the plastic material was, vice versa; a test standard applied in the present invention was ASTM D1238, a unit applied in the present invention was g/10min, test conditions applied were the melt flow rate (MFR) under 230 °C and a load of 2.16 kg.

7-10 g of cylindrical pellets were taken randomly for 50 times during the producing process, and were dried for 4 hours under 100 °C, the stability factor of the melt flow rate (MFR) in the present invention was defined as an average value of a square value of a difference between MFRₙ tested by the above-describe method and MFRₘₑₐₙ which was an average value of the melt flow rates (MFR) of 50 times, i.e. the stability factor of the melt flow rate (MFR) equals to ((MFR₁-MFRₘₑₐₙ)²+(MFR₂-MFRₘₑₐₙ)²+(MFR₃-MFRₘₑₐₙ)²+···+(MFR₅₀-MFRₘₑₐₙ)²)/50. Obviously, the smaller the value presented the higher the melt flow stability of the polycarbonate composition was, vice versa.

A polycarbonate used in the present invention:
a component a-1: PC 1300-10 (LG, Korea); and
a component a-2: PC 1225 (Teijin, Japan).

A graft copolymer used in the present invention:
a component b-1: ABS1 emulsion polymerization method 757 (Chi Mei, Taiwan);
a component b-2: ABS2 bulk method 8391 (Gaoqiao, Shanghai); and
a component b-3: MBS EM500 (LG, Korea);

A fire retardant used in the present invention:
a component c: BDP, bisphenol A-bis(diphenyl phosphate) (ADEKA).
Phosphorus oxychloride: POCl₃ (Suzhou Hantai Chemical Co., Ltd.).

Other aids used in the present invention:
a component d-1: AO1076: β-(3,5-di-tert-butyl-4-hydroxyphenyl)propionic acid stearyl ester, CAS NO.: [2082-79-3]), as an antioxidant; and
a component d-3: PTFE (polytetrafluoroethylene), as an anti-dripping agent.

### Embodiments 1-12 and Comparative Examples 1-6: Preparation of Polycarbonate Compositions

Phosphorus oxychloride and the fire retardant were formulated according to a mass ratio of 1:50, along with methanol, into a phosphorus oxychloride methanol solution with a mass fraction of 0.02 wt%; the phosphorus oxychloride methanol solution and a polycarbonate were blended in a high-speed mixer to obtain a pretreated polycarbonate, and the pretreated polycarbonate was dried for 8 hours under 120 °C to remove residual methanol. After the pretreated polycarbonate, the graft copolymer, the fire retardant, and other aids were weighed in accordance with formulas in Table 1, they were blended by the high-speed mixer or a mixer, and were extruded, cooled by means of water, and pelletized to obtain a columnar particulate polycarbonate composition. A UL-94 fire retarding property and a stability factor of a melt flow rate (MFR) of the polycarbonate compositions were tested, and data were listed in Table 1.

Embodiments 1, 16, 17 and 12 are reference examples.

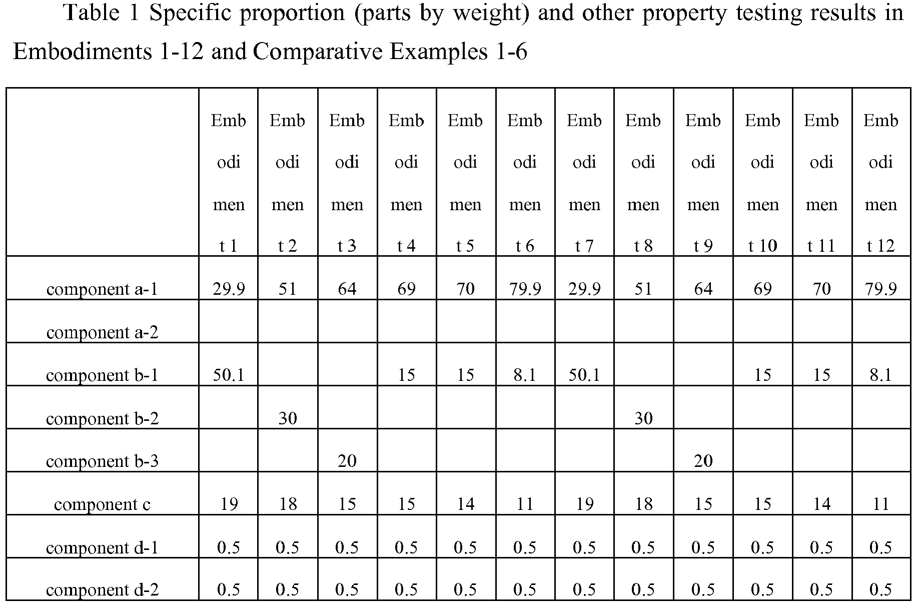

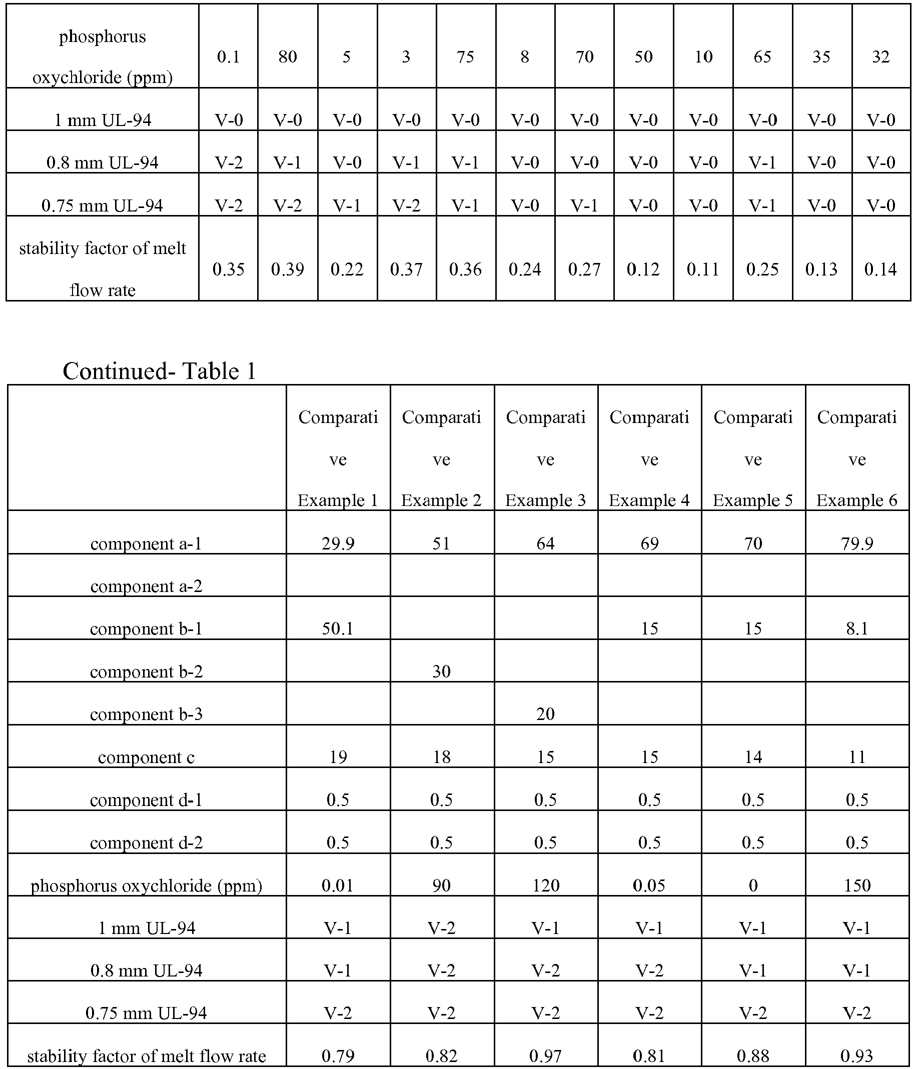

It may be seen from a comparison of Embodiments with Comparative Examples in Table 1 that, according to the present invention, when a tested content of phosphorus oxychloride in the polycarbonate composition formula, based on a total weight of the polycarbonate composition does not exceed 80 ppm, phosphorus oxychloride remained in a trace level can be beneficial to generation of a stable compound such as phosphoric acid and a polymetaphosphate, can further facilitate generation of a char layer, can improve desperation of a phosphorus-containing fire retardant in the composition at the same time, can finally improve a fire resistance and a melt stability of the polycarbonate composition, and is particularly suitable for an occasion with relatively high requirements for an operating environment.

## Claims

1. A polycarbonate composition, comprising the following components in parts by weight:
a. 31-75 parts of polycarbonate;
b. 9-35 parts of a rubber-modified graft copolymer;
c. 5-24.1 parts of fire retardant; and
d. 0-9.9 parts of other aids;
wherein the sum of the parts by weight of the four components a, b, c, and d is 100; and a content of phosphorus oxychloride based on a total weight of the polycarbonate composition is less than or equal to 80 ppm and greater than or equal to 0.1 ppm.

2. The polycarbonate composition according to claim 1, wherein the content of phosphorus oxychloride based on the total weight of the polycarbonate composition is less than or equal to 70 ppm and greater than or equal to 5 ppm, preferably less than or equal to 50 ppm and greater than or equal to 10 ppm.

3. The polycarbonate composition according to claim 1 or 2, wherein the polycarbonate is selected from one or more of a polycarbonate prepared by an interfacial polymerization method, a polycarbonate prepared by a melted state transesterification method, a polycarbonate prepared by a pyridine method, a polycarbonate prepared by a method of ring-opening polymerization of a cyclic carbonate compound and a polycarbonate prepared by a method of solid phase transesterification of a prepolymer.

4. The polycarbonate composition according to claim 1 or 2, wherein the polycarbonate is selected from one or more of an aromatic polycarbonate, an aliphatic polycarbonate, an aromatic-aliphatic polycarbonate, a branched polycarbonate, and a siloxane copolycarbonate, preferably the aromatic polycarbonate; the aromatic polycarbonate is selected from an aromatic polycarbonate with a viscosity-average molecular weight of 13000-40000, preferably the aromatic polycarbonate with the viscosity-average molecular weight of 16000-28000, and more preferably the aromatic polycarbonate with the viscosity-average molecular weight of 17000-24000, wherein the viscosity-average molecular weight is calculated by a solution viscosity using dichloromethane as a solvent at a test temperature of 25 °C.

5. The polycarbonate composition according to claim 1 or 2, wherein the graft copolymer is selected from one or more of a rubber-modified graft copolymer prepared by a bulk polymerization method, a rubber-modified graft copolymer prepared by an emulsion polymerization method, and a rubber-modified graft copolymer prepared by a bulk-suspension method.

6. The polycarbonate composition according claim 1 or 2, wherein the graft copolymer is selected from graft copolymers containing following b.1 on b.2 in parts by weight:
b.1 5-95 parts of a mixture of b.1.1 and b.1.2:
b.1.1 50-95 parts of one or more of styrene, a styrene derivative such as α-methyl styrene, p-benzyl styrene, and divinyl styrene, a C1-C8 alkyl methacrylate, a C1-C8 alkyl acrylate, dimethyl siloxane, phenyl siloxane, and a multi-alkyl siloxane;
b.1.2 5-50 parts of one or more of acrylonitrile, methyl acrylonitrile, a C1-C8 alkyl methacrylate, and a C1-C8 alkyl acrylate; and
b.2 5-95 parts of one or more of a polybutadiene, a polyisoprene, a styrene-butadiene random copolymer and block copolymer, an acrylonitrile-butadiene random copolymer and block copolymer, a copolymer of a polybutadiene and a polyisoprene, a copolymer of ethylene and α-alkene, a copolymer of ethylene and an α-unsaturated carboxylate, an ethylene-propene-nonconjugated diene terpolymer, an acryloyl rubber, and an organic siloxane rubber.

7. The polycarbonate composition according to claim 6, wherein the graft copolymer is selected from one or more of an acrylonitrile-styrene copolymer AS, an acrylonitrile-butadiene-styrene graft copolymer ABS, a methyl methacrylate-acrylonitrile-butadiene-styrene copolymer MABS, an acrylonitrile-styrene-acrylic acid terpolymer ASA, and a methyl methacrylate-butadiene-styrene graft copolymer MBS, preferably the acrylonitrile-butadiene-styrene graft copolymer ABS; wherein a particle size of the MBS is preferably 0.1 µm to 0.5 µm, a particle size of the ABS in a bulk polymerization method is preferably 0.1 µm to 2 µm, and a particle size of the ABS in an emulsion polymerization method is preferably 0.05 µm to 0.2 µm.

8. The polycarbonate composition according to claim 1 or 2, wherein the fire retardant is selected from a halogen-based fire retardant or a halogen-free fire retardant, preferably the halogen-free fire retardant; the halogen-based fire retardant is selected from one or more of a brominated polystyrene, a brominated polyphenyl ether, a brominated bisphenol A type epoxy resin, a brominated styrene-maleic anhydride copolymer, a brominated epoxy resin, a brominated phenoxy resin, decabromodiphenyl ether, decabromodiphenyl, a brominated polycarbonate, perbromotricyclopentadecane or a brominated aromatic crosslinked polymer, preferably the brominated polystyrene; and the halogen-free fire retardant is selected from one or more of a nitrogen-containing fire retardant, a phosphorus-containing fire retardant, and a nitrogen- and phosphorus-containing fire retardant, preferably the phosphorus-containing fire retardant.

9. The polycarbonate composition according to claim 8, wherein the phosphorus-containing fire retardant is selected from one or more of triphenyl phosphate, tritolyl phosphate, cresyl diphenyl phosphate, trixylyl phosphate, tris(2,4,6-trimethylphenyl) phosphate, tris(2,4-di-tert-butylphenyl) phosphate, tris(2,6-di-tert-butylphenyl) phosphate, resorcinol bis(diphenyl phosphate), hydroquinone bis(diphenyl phosphate), bisphenol A-bis(diphenyl phosphate), resorcinol bis(2,6-di-tert-butylphenyl phosphate), and hydroquinone bis(2,6-dimethylphenyl phosphate).

10. The polycarbonate composition according to claim 1 or 2, wherein the other aids of the component d is selected from one or more of a heat stabilizer, an antioxidant, an anti-dripping agent, a light stabilizer, a plasticizer, a filler, and a colorant.

11. A preparation method of the polycarbonate composition according to any of claims 1 to 10, **characterized in that**, the preparation method includes following steps:
1) formulating phosphorus oxychloride and a fire retardant according to a mass ratio of 1:50, along with methanol, into a phosphorus oxychloride methanol solution with a mass fraction of 0.02 wt%;
2) blending the phosphorus oxychloride methanol solution and a polycarbonate in a high-speed mixer to obtain a pretreated polycarbonate, and drying the pretreated polycarbonate for 8 hours under 120 °C to remove residual methanol; and
3) after weighing the pretreated polycarbonate, a graft copolymer, the fire retardant, and other aids in proportion, blending by the high-speed mixer or a mixer, extruding, cooling by means of water, and pelletizing to obtain a columnar particulate polycarbonate composition.

## Patentansprüche

1. Polycarbonat-Zusammensetzung, umfassend die folgenden Komponenten in Gewichtsteilen:
a. 31-75 Teile eines Polycarbonats;
b. 9-35 Teile eines kautschuk-modifizierten Propf-Copolymers;
c. 5-24,1 Teile eines feuerhemmenden Stoffs; und
d. 0-9,9 Teile anderer Hilfsmittel;
worin die Summe der Gewichtsteile der vier Komponenten a, b, c und d 100 ist; und ein Gehalt von Phosphoroxidchlorid aufgrund eines Gesamtgewichts der Polycarbonat-Zusammensetzung weniger als oder gleich 80 ppm ist und größer als oder gleich 0,1 ppm ist.

2. Polycarbonat-Zusammensetzung nach Anspruch 1, worin der Gehalt von Phosphoroxidchlorid aufgrund des Gesamtgewichts der Polycarbonat-Zusammensetzung weniger als oder gleich 70 ppm ist und größer als oder gleich 5 ppm ist, vorzugsweise weniger als oder gleich 50 ppm ist und größer als oder gleich 10 ppm ist.

3. Polycarbonat-Zusammensetzung nach Anspruch 1 oder 2, worin das Polycarbonat aus einem oder mehreren von einem durch ein Grenzflächenpolymerisationsverfahren hergestellten Polycarbonat, einem durch ein Transesterifizierungsverfahren in geschmolzenem Zustand hergestellten Polycarbonat, einem durch ein Pyridinverfahren hergestellten Polycarbonat, einem durch ein Ringöffnungspolymerisationsverfahren einer cyclischen Carbonatverbindung hergestellten Polycarbonat und einem durch ein Verfahren von Transesterifizierung in festem Zustand eines Prepolymers hergestellten Polycarbonat ausgewählt ist.

4. Polycarbonat-Zusammensetzung nach Anspruch 1 oder 2, worin das Polycarbonat aus einem oder mehreren von einem aromatischen Polycarbonat, einem aliphatischen Polycarbonat, einem aromatisch-aliphatischen Polycarbonat, einem verzweigten Polycarbonat und einem Siloxan-Copolycarbonat, vorzugsweise dem aromatischen Polycarbonat ausgewählt ist; das aromatische Polycarbonat aus einem aromatischen Polycarbonat mit einem Viskositäts-Durchschnittsmolekulargewicht von 13000-40000, bevorzugt dem aromatischen Polycarbonat mit dem Viskositäts-Durchschnittsmolekulargewicht von 16000-28000, und noch bevorzugter dem aromatischen Polycarbonat mit dem Viskositäts-Durchschnittsmolekulargewicht von 17000-24000 ausgewählt ist.

5. Polycarbonat-Zusammensetzung nach Anspruch 1 oder 2, worin das Propf-Copolymer aus einem oder mehreren von einem durch ein Bulk-Polymerisationsverfahren hergestellten kautschuk-modifizierten Propf-Copolymer, einem durch ein Emulsionspolymerisationsverfahren hergestellten kautschuk-modifizierten Propf-Copolymer und einem durch ein Bulk-Suspensionsverfahren hergestellten kautschuk-modifizierten Propf-Copolymer ausgewählt ist.

6. Polycarbonat-Zusammensetzung nach Anspruch 1 oder 2, worin das Propf-Copolymer aus Propf-Copolymeren ausgewählt ist, die die folgenden b.1 auf b.2 in Gewichtsteilen enthalten:
b.1 5-95 Teile einer Mischung von b.1.1 und b.1.2:
b.1.1 50-95 Teile aus einem oder mehreren von Styrol, einem Styrolderivat wie α-Methylstyrol, p-Benzylstyrol, und Divinylstyrol, einem C1-C8 Alkylmethacrylat, einem C1-C8 Alkylacrylat, Dimethylsiloxan, Phenylsiloxan, und einem Multialkylsiloxan;
b.1.2 5-50 Teile aus einem oder mehreren von Acrylnitril, Methylacrylnitril, einem C1-C8 Alkylmethacrylat, und einem C1-C8 Alkylacrylat; und
b.2 5-95 Teile aus einem oder mehreren von einem Polybutadien, einem Polyisopren, einem statistischen Styrol-Butadien-Copolymer und Block-Copolymer, einem statistischen Acrylnitril-Butadien und Block-Copolymer, einem Copolymer aus einem Polybutadien und einem Polyisopren, einem Copolymer aus Ethylen und α-Alken, einem Copolymer aus Ethylen und einem α-ungesättigten Carboxylat, einem Terpolymer aus Ethylen, Propen und nicht-konjugiertem Dien, einem Acryloyl-Kautschuk, und einem organischen Siloxan-Kautschuk.

7. Polycarbonat-Zusammensetzung nach Anspruch 6, worin das Propf-Copolymer aus einem oder mehreren von einem Acrylnitril-Styrol-Copolymer AS, einem Acrylnitril-Butadien-Styrol-Propf-Copolymer ABS, einem Methyl-Methacrylat-Acrylnitril-Butadien-Styrol-Copolymer MABS, einem Acrylnitril-Styrol-Acrylsäure-Terpolymer ASA, und einem Methyl-Methacrylat-Butadien-Styrol-Propf-Copolymer MBS, bevorzugt dem Acrylnitril-Butadien-Styrol-Propf-Copolymer ABS ausgewählt ist; worin eine Partikelgröße des MBS vorzugsweise 0,1 µm bis 0,5 µm ist, eine Partikelgröße des ABS in einem Bulk-Polymerisationsverfahren vorzugsweise 0,1 µm bis 2 µm ist, und eine Partikel größe des ABS in einem Emulsionspolymerisationsverfahren vorzugsweise 0,05 µm bis 0,2 µm ist.

8. Polycarbonat-Zusammensetzung nach Anspruch 1 oder 2, worin der feuerhemmende Stoff aus einem halogenbasierten feuerhemmenden Stoff oder einem halogenfreien feuerhemmenden Stoff, vorzugsweise dem halogenfreien feuerhemmenden Stoff ausgewählt ist; der halogenbasierte feuerhemmende Stoff aus einem oder mehreren von einem bromierten Polystyrol, einem bromierten Polyphenyl-Ether, einem bromierten Bisphenol-A-Typ-Epoxyharz, einem bromierten Styrol-Maleinsäureanhydrid-Copolymer, einem bromierten Epoxyharz, einem bromierten Phenoxyharz, Decabromodiphenylether, Decabromodiphenyl, einem bromierten Polycarbonat, Perbromotricyclopentadecan oder einem bromierten aromatischen quervernetzten Polymer, vorzugsweise dem bromierten Polystyrol ausgewählt ist; und der halogenfreie feuerhemmende Stoff aus einem oder mehreren von einem stickstoffhaltigen feuerhemmenden Stoff, einem phosphorhaltigen feuerhemmenden Stoff, und einem stickstoff- und phosphorhaltigen feuerhemmenden Stoff, vorzugsweise dem phosphorhaltigen feuerhemmenden Stoff ausgewählt ist.

9. Polycarbonat-Zusammensetzung nach Anspruch 8, worin der phosphorhaltige feuerhemmende Stoff aus einem oder mehreren von Triphenylphosphat, Tritolylphosphat, Cresyldiphenylphosphat, Trixylylphosphat, Tris(2,4,6-Trimethylphenyl)-Phosphat, Tris(2,4-Di-Tert-Butylphenyl)-Phosphat, Tris(2,6-Di-Tert-Butylphenyl)-Phosphat, Resorcin Bis(Diphenylphosphat), Hydrochinon Bis(Diphenylphosphat), Bisphenol A-Bis(Diphenylphosphat), Resorcin Bis(2,6-Di-Tert-Butylphenylphosphat) und Hydrochinon Bis(2,6-Dimethylphenylphosphat) ausgewählt ist.

10. Polycarbonat-Zusammensetzung nach Anspruch 1 oder 2, worin die anderen Hilfsmittel der Komponente d aus einem oder mehreren von einem Wärmestabilisator, einem Antioxydanten, einem Tropfverhinderungsmittel, einem Lichtstabilisator, einem Weichmacher, einem Füllstoff und einem Farbstoff ausgewählt sind.

11. Herstellungsverfahren der Polycarbonat-Zusammensetzung nach einem der Ansprüche 1 bis 10, **dadurch gekennzeichnet, dass** das Herstellungsverfahren die folgenden Schritte umfasst:
1) Formulieren von Phosphoroxychlorid und eines feuerhemmenden Stoffs gemäß einem Masseverhältnis von 1:50, zusammen mit Methanol, in eine Phosphoroxychlorid-Methanol-Lösung mit einem Massenanteil von 0,02 Gew.-%;
2) Mischen der Phosphoroxychlorid-Methanol-Lösung und eines Polycarbonats in einem Hochgeschwindigkeitsmischer, um ein vorbehandeltes Polycarbonat zu erhalten, und Trocknen des vorbehandelten Polycarbonats 8 Stunden lang unter 120°C, um Restmethanol zu entfernen; und
3) nach dem Wiegen des vorbehandelten Polycarbonats, eines Propf-Copolymers, des feuerhemmenden Stoffs, und anderer Hilfsmittel im Verhältnis, Mischen durch einen Hochgeschwindigkeitsmischer oder einen Mischer, Extrudieren, Kühlen durch Wasser, und Pelletisieren, um eine Polycarbonat-Zusammensetzung säulenförmiger Teilchen zu erhalten.

## Revendications

1. Composition de polycarbonate, comprenant les composants suivants en parties en poids :
a. 31 à 75 parties d'un polycarbonate ;
b. 9 à 35 parties d'un copolymère greffé modifié au caoutchouc ;
c. 5 à 24,1 parties d'un agent ignifuge ; et
d. 0 à 9,9 parties d'autres adjuvants ;
dans laquelle la somme des parties en poids des quatre composants a, b, c et d est 100 ; et une teneur en oxychlorure de phosphore sur la base d'un poids total de la composition de polycarbonate est inférieure ou égale à 80 ppm et supérieure ou égale à 0,1 ppm.

2. Composition de polycarbonate selon la revendication 1, dans laquelle la teneur en oxychlorure de phosphore sur la base du poids total de la composition de polycarbonate est inférieure ou égale à 70 ppm et supérieure ou égale à 5 ppm, de préférence inférieure ou égale à 50 ppm et supérieure ou égale à 10 ppm.

3. Composition de polycarbonate selon la revendication 1 ou 2, dans laquelle le polycarbonate est choisi parmi un ou plusieurs parmi un polycarbonate préparé par un procédé de polymérisation interfaciale, un polycarbonate préparé par un procédé de transestérification à l'état fondu, un polycarbonate préparé par un procédé à la pyridine, un polycarbonate préparé par un procédé de polymérisation par ouverture de cycle d'un composé de carbonate cyclique et un polycarbonate préparé par un procédé de transestérification en phase solide d'un prépolymère.

4. Composition de polycarbonate selon la revendication 1 ou 2, dans laquelle le polycarbonate est choisi parmi un ou plusieurs parmi un polycarbonate aromatique, un polycarbonate aliphatique, un polycarbonate aromatique-aliphatique, un polycarbonate ramifié et un copolycarbonate de siloxane, de préférence le polycarbonate aromatique ; le polycarbonate aromatique est choisi parmi un polycarbonate aromatique avec un poids moléculaire moyen en viscosité de 13000 à 40000, de préférence le polycarbonate aromatique avec le poids moléculaire moyen en viscosité de 16000 à 28000, et de manière plus préférée le polycarbonate aromatique avec le poids moléculaire moyen en viscosité de 17000 à 24000.

5. Composition de polycarbonate selon la revendication 1 ou 2, dans laquelle le copolymère greffé est choisi parmi un ou plusieurs parmi un copolymère greffé modifié par caoutchouc préparé par un procédé de polymérisation en masse, un copolymère greffé modifié par caoutchouc préparé par un procédé de polymérisation en émulsion, et un copolymère greffé modifié au caoutchouc préparé par un procédé de suspension en masse.

6. Composition de polycarbonate selon la revendication 1 ou 2, dans laquelle le copolymère greffé est choisi parmi des copolymères greffés contenant les b.1 à b.2 qui suivent en parties en poids :
b.1 5 à 95 parties d'un mélange de b.1.1 et b.1.2:
b.1.1 50 à 95 parties d'un ou plusieurs styrènes, d'un dérivé de styrène tel que l'α-méthylstyrène, le p-benzylstyrène et le divinylstyrène, d'un méthacrylate d'alkyle en C1-C8, d'un acrylate d'alkyle en C1-C8, de diméthylsiloxane, de phénylsiloxane et de multi-alkylsiloxane ;
b.1.2 5 à 50 parties d'un ou plusieurs parmi l'acrylonitrile, le méthylacrylonitrile, un méthacrylate d'alkyle en C1-C8 et un acrylate d'alkyle en C1-C8 ; et
b.2 5 à 95 parties d'un ou plusieurs parmi polybutadiène, polyisoprène, copolymère statistique et copolymère séquencé de styrène-butadiène, copolymère statistique et copolymère séquencé d'acrylonitrile-butadiène, copolymère de polybutadiène et de polyisoprène, copolymère de d'éthylène et d'α-alcène, copolymère d'éthylène et d'un carboxylate α-insaturé, un terpolymère d'éthylène-propène-diène non conjugué, un caoutchouc d'acryloyle et un caoutchouc de siloxane organique.

7. Composition de polycarbonate selon la revendication 6, dans laquelle le copolymère greffé est choisi parmi un ou plusieurs parmi un copolymère d'acrylonitrile-styrène AS, un copolymère greffé d'acrylonitrile-butadiène-styrène ABS, un copolymère de méthacrylate de méthyle-acrylonitrile-butadiène-styrène MABS, un terpolymère d'acrylonitrile-styrène-acide acrylique ASA et un copolymère greffé de méthacrylate de méthyle-butadiène-styrène MBS, de préférence le copolymère greffé d'acrylonitrile-butadiène-styrène ABS ; dans la une taille de particule du MBS est de préférence de 0,1 µm à 0,5 µm, une taille de particule de l'ABS dans un procédé de polymérisation en masse est de préférence de 0,1 µm à 2 µm, et une taille de particule de l'ABS dans un procédé de polymérisation en émulsion est de préférence de 0,05 µm à 0,2 µm.

8. Composition de polycarbonate selon la revendication 1 ou 2, dans laquelle l'agent agent ignifuge est choisi parmi un agent ignifuge à base d'halogène ou un agent ignifuge sans halogène, de préférence l'agent ignifuge sans halogène ; l'agent ignifuge à base d'halogène est choisi parmi un ou plusieurs parmi un polystyrène bromé, un éther polyphénylique bromé, une résine époxy de type bisphénol A bromé, un copolymère de styrène-anhydride maléique bromé, une résine époxy bromée, une résine phénoxy bromée, du décabromodiphényléther du décabromodiphényle, un polycarbonate bromé, du perbromotricyclopentadécane ou un polymère réticulé aromatique bromé, de préférence le polystyrène bromé ; et l'agent ignifuge sans halogène est choisi parmi un ou plusieurs parmi un agent ignifuge contenant de l'azote, un agent ignifuge contenant du phosphore et un agent ignifuge contenant de l'azote et du phosphore, de préférence l'agent ignifuge contenant du phosphore.

9. Composition de polycarbonate selon la revendication 8, dans laquelle l'agent ignifuge contenant du phosphore est choisi parmi un ou plusieurs parmi le phosphate de triphényle, le phosphate de tritolyle, le phosphate de crésyldiphényle, le phosphate de trixylyle, le phosphate de tris(2,4,6-triméthylphényle), le phosphate de tris(2,4-di-tert-butylphényl), le phosphate de tris(2,6-di-tert-butylphényl), le bis(diphénylphosphate) de résorcinol, le bis(diphénylphosphate) d'hydroquinone, le bisphénol A-bis (diphénylphosphate), le bis(2,6-di-tert-butylphénylphosphate) de résorcinol et le bis(2,6-diméthylphénylphosphate) d'hydroquinone.

10. Composition de polycarbonate selon la revendication 1 ou 2, dans laquelle les autres adjuvants du composant d sont choisies parmi un ou plusieurs parmi un stabilisant thermique, un antioxydant, un agent anti-gouttes, un photostabilisant, un plastifiant, une charge, et un colorant.

11. Procédé de préparation de la composition de polycarbonate selon l'une quelconque des revendications 1 à 10, **caractérisé en ce que** le procédé de préparation comprend les étapes suivantes :
1) une formulation de l'oxychlorure de phosphore et d'un agent ignifuge selon un rapport massique de 1 :50, avec du méthanol, dans une solution d'oxychlorure de phosphore-méthanol avec une fraction massique de 0,02 % en poids ;
2) une mélange de la solution d'oxychlorure de phosphore-méthanol et d'un polycarbonate dans un mélangeur à haute vitesse pour obtenir un polycarbonate prétraité, et le séchage du polycarbonate prétraité pendant 8 heures à 120°C pour éliminer le méthanol résiduel ; et
3) après avoir pesé le polycarbonate prétraité, un copolymère greffé, l'agent ignifuge et d'autres adjuvants en proportion, une mélange par le mélangeur à grande vitesse ou un mélangeur, une extrusion, un refroidissement au moyen d'eau et une granulation pour obtenir une composition de polycarbonate particulaire colonnaire.
